# EUROPEAN PATENT SPECIFICATION

(11) **EP 0 669 534 B1**
(45) Date of publication and mention of the grant of the patent: **16.06.1999**
(21) Application number: 95102009.8
(22) Date of filing: 14.02.1995
(51) Int. Cl.: G01P 3/44, G01P 1/02

(54) **Method of producing a sensor assembly for an electromagnetic detecting device, and sensor assembly produced thereby**
Verfahren zur Herstellung einer Messaufnehmeranordnung für eine elektromagnetische Detektorvorrichtung sowie nach diesem Verfahren hergestellte Messaufnehmeranordnung
Procédé pour la fabrication d'un ensemble capteur pour un dispositif détecteur électromagnétique et ensemble capteur obtenu selon ce procédé

(30) Priority: 15.02.1994 IT TO940086
(43) Date of publication of application: 30.08.1995
(73) Proprietor: TRW SIPEA S.p.A., 10042 Nichelino (IT)
(72) Inventor: Rubinato, Giampietro, I-10028 Trofarello (IT)
(74) Representative: Cerbaro, Elena

(56) References cited:
- EP-A- 0 233 346
- EP-A- 0 547 935
- US-A- 4 915 512

## Description

The present invention relates to a method of producing a sensor assembly for an electromagnetic detecting device, and to the sensor assembly produced thereby.

More specifically, the electromagnetic detecting device referred to in the present invention is of the type comprising a magnet and a sensor assembly connected to and movable in relation to each other; the sensor assembly comprising an integrated circuit with contact pins, a printed circuit connected to the integrated circuit, and a plastic outer body housing the printed and integrated circuits.

Known sensor assemblies of the above type are normally produced by welding the integrated circuit pins to the printed circuit, inserting the circuits inside the outer body, and pouring into the outer body liquid resin material which, when polymerized, forms one piece with the other components and locks the printed and integrated circuits in position.

Known methods present several drawbacks, mainly due to the use of resin materials which are unhygienic both ecologically and as regards working conditions, involve high-cost waste processing operations, and take a relatively long time to set, even to-the extent of the polymerization reaction determining the production time of the sensor assembly. Moreover, with known methods, difficulty is encountered in ensuring correct positioning of the parts, in particular of the integrated circuit inside the sensor assembly and hence in relation to the magnet, and on which efficient operation of the detecting device depends.

A method of the type defined in the preamble of claim 1 and an assembly according to the preamble of claims 3 are disclosed in EP-A-0 547 935, wherein the Hall-effect sensing device is inserted in a support block having a stud for insertion in a hole of the printed board. This arrangement is not able to ensure the requested position precision.

It is an object of the present invention to provide a method of producing a sensor assembly for an electromagnetic detecting device, and which provides for overcoming the aforementioned drawbacks typically associated with known methods.

According to the present invention, there is provided a method of producing a sensor assembly for an electromagnetic detecting device, as defined in claim 1.

The present invention also relates to a sensor assembly for an electromagnetic detecting device.

According to the present invention, there is provided a sensor assembly for an electromagnetic detecting device, as defined in claim 3.

A non-limiting embodiment of the present invention will be described by way of example with reference to the accompanying drawings, in which:
Figure 1 shows an exploded view in perspective of a subassembly of a sensor assembly in accordance with the present invention;
Figure 2 shows a view in perspective of the Figure 1 sensor assembly;
Figure 3 shows a section along line III-III in Figure 2;
Figure 4 shows a diametrical section of the Figure 1 sensor assembly fitted to a vehicle bearing.

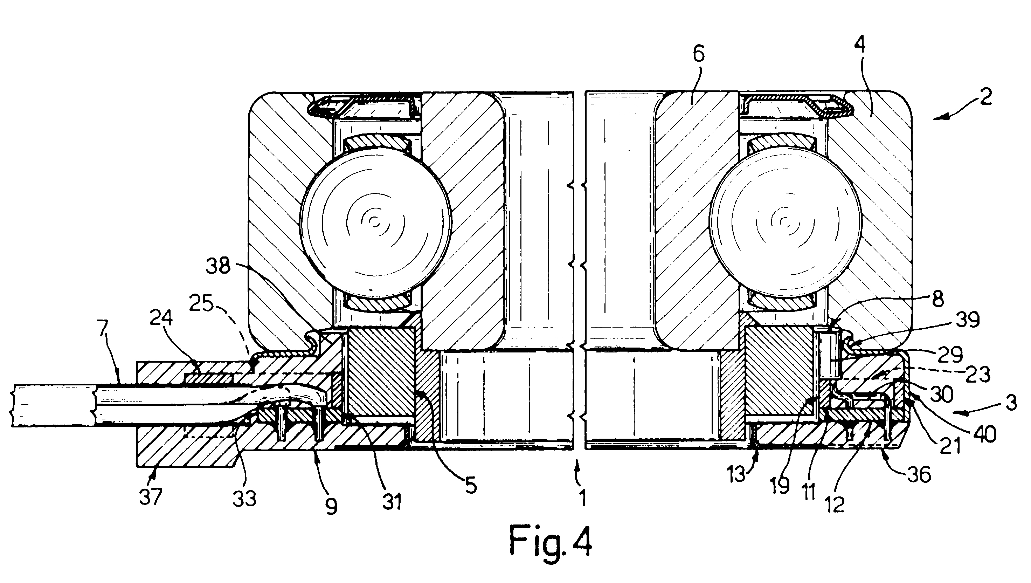

Number 1 in Figure 4 indicates an electromagnetic detecting device for determining the direction and angular rotation speed of a bearing 2 of a vehicle (not shown), and comprising a sensor assembly 3 connected to the fixed outer ring 4 of bearing 2, and a magnet 5 integral with the movable inner ring 6 of bearing 2. Assembly 3 and magnet 5 are therefore movable in relation to each other.

Magnet 5 is so polarized as to present a number of circumferentially alternating North and South poles.

An electric cable 7 supplies assembly 3, and transfers, to a processing unit (not shown) external to device 1, the electric quantities acquired by assembly 3 and related to the rotation speed and direction of magnet 5.

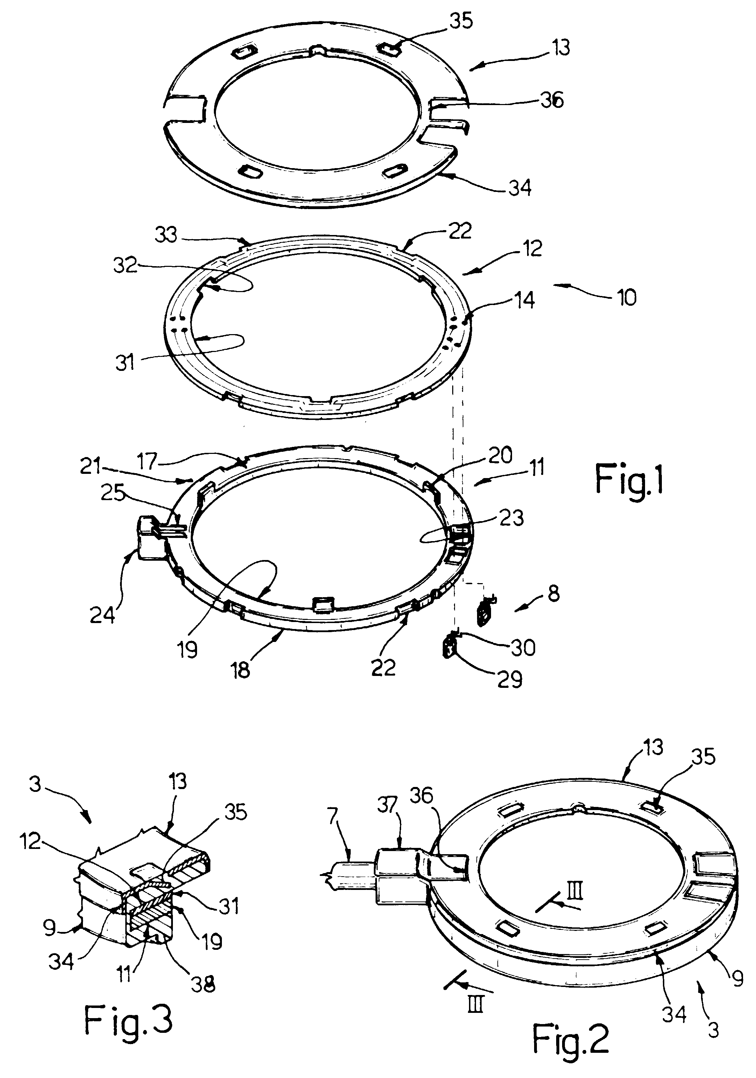

As shown also in Figures 1 to 3, sensor assembly 3 as a whole is substantially annular, and comprises an outer body 9 housing a subassembly 10, the component parts of which are shown in Figure 1, and which in turn comprises two integrated circuits 8, a spacer element 11, a printed circuit 12, and a metal flange 13. More specifically, spacer element 11 is located between printed circuit 12 and integrated circuits 8; flange 13 is located on the opposite side of circuit 12 to element 11; and element 11, circuit 12 and flange 13 are substantially in the form of coaxial annular disks with the same outside radius and inside which magnet 5 rotates.

Element 11 is made of a first plastic material, and is defined by a first flat face 17, a second flat face 18 parallel to face 17, and by substantially cylindrical inner and outer lateral surfaces. Each face 17, 18 extends between an inner circular edge 19 and an outer circular edge 21; and spacer element 11 comprises reference members 20 close to edge 19, and seats 22 close to edge 21.

Members 20 are defined by three integral teeth extending from face 17 towards circuit 12; and seats 22 are defined by four recesses on the outer surface of element 11.

Element 11 also presents two through openings 23 from face 17 to face 18.

A hollow terminal 24 extends radially outwards and integrally with element 11, and is defined by a block of plastic material of a height greater than the thickness of element 11. At terminal 24, element 11 presents two through slots 25 from face 17 to face 18, for the passage of strands (not shown) welded to printed circuit 12 and projecting from an end portion of cable 7.

Integrated circuits 8 consist of Hall effect sensors; each present a body 29 and three contact pins 30; and are so mounted that each body 29 rests against face 18, and the three contact pins 30 extend through one of openings 23 and through holes 14 in printed circuit 12 to which they are welded.

The inner edge 31 of printed circuit 12 presents locating means 32, and the outer edge 33 of circuit 12 presents seats 22 similar to those of element 11.

Locating means 32 are defined by three recesses aligned with reference members 20 of element 11 so as to correctly position and at least partly lock printed circuit 12 in relation to element 11; and respective seats 22 of element 11 and printed circuit 12 are also substantially superimposed.

Flange 13 (Figure 3) extends radially inwards beyond edge 19 of element 11; presents an outer annular edge 34 bent towards printed circuit 12; and comprises mechanical fastening means 35 defined by four tabs formed by blanking the metal material of flange 13 and bending it towards printed circuit 12. Flange 13 also comprises slots 36 extending radially inwards of flange 13 from edge 34, and located at the points at which pins 30 and cable 7 are welded to printed circuit 12, for preventing electrical contact with flange 13.

Outer body 9, formed by injection molding a second plastic material, provides for gripping together spacer element 11, printed circuit 12 and flange 13, by fastening itself mechanically to printed circuit 12 and spacer element 11 at seats 22, and to flange 13 by means of tabs 35.

Body 9 integrally forms a radial appendix 37 housing hollow terminal 24; and an annular frame 38 (Figure 3) extending axially from the opposite side of body 9 in relation to flange 13, and cooperating with clinching means 39 provided on a metal casing 40 (Figure 4) which is fitted over assembly 3 when assembling device 1.

Bodies 29 of integrated circuits 8 are located inwards of assembly 3, i.e. towards magnet 5, and are positioned substantially flush with the surface internally defining body 9, and in a predetermined manner in relation to sensor assembly 3 and, after assembly, to magnet 5.

The method of producing sensor assembly 3 according to the present invention comprises successive steps wherein printed circuit 12 is superimposed on face 17 of spacer element 11; integrated circuits 8 are placed on the opposite face 18 and welded; the end portion of electric cable 7 is inserted inside terminal 24 and welded to circuit 12 through slots 25; flange 13 is assembled to form subassembly 10; and subassembly 10 is subjected to an injection molding operation inside a mold presenting an impression complementary to the desired shape of sensor assembly 3. The second plastic material externally covers second face 18 to also form frame 38; penetrates between printed circuit 12 and flange 13; fills seats 22 to laterally lock spacer element 11 and printed circuit 12; and fills slots 36 to mechanically fasten and electrically insulate flange 13 and printed circuit 12. Before being fitted to bearing 2, the assembly 3 so formed may also be fitted with casing 40 clinched to frame 38 of body 9.

In actual use, sensor assembly 3 according to the present invention provides for determining the angular speed of bearing 2 by exploiting the Hall effect; and, being two in number, integrated circuits 8 also provide for determining the rotation direction of bearing 2.

The advantages of the present invention will be clear from the foregoing description. In particular, the sensor assembly according to the invention is fully assembled on-line with no resin materials required, thus safeguarding the environment and providing for hygienic working conditions, while at the same time reducing production time and cost by eliminating the time-consuming polymerization stage on the subassembly production line. Moreover, the spacer element provides for accurately positioning the integrated circuits in relation to each other and, above all, in relation to the finished sensor and hence the magnet.

Clearly, changes may be made to the sensor assembly and relative production method described and illustrated herein without, however, departing from the scope of the present invention as defined in the claims.

## Claims

1. A method for producing a sensor assembly (3) for an electromagnetic detecting device (1), comprising a body (9) of insulating material embedding a printed circuit (12) and at least one integrated circuit (8), wherein said integrated circuit (8) presents contact pins (30) connected to said printed circuit (12); characterized by the successive steps of:
- placing an annular spacer element (11) between said printed circuit (12) and said integrated circuit (8);
- welding said contact pins (30) of said integrated circuit (8) to said printed circuit;
- placing a metal flange (13) on said printed circuit to form a subassembly (10);
- injection molding a plastic material into said subassembly to form said body (9).

2. A method according to claim 1, characterized in that prior to said step of placing a metal flange, an electric cable (7) is welded to said printed circuit (12).

3. A sensor assembly (3) for an electromagnetic detecting device (1), comprising a body (9) of rigid material embedding a printed circuit (12) and at least one integrated circuit (8), characterized in that said body (9) is made of an injection molded plastic material and in that said assembly further comprises an annular spacer element (11) arranged between said printed circuit (12) and said integrated circuit (12) and having reference members (20) for accurately positioning said integrated circuit (8); and a metal flange (13) externally fitted to said printed circuit (12) on the side of said printed circuit opposite to said spacer element (11); said flange (13) having mechanical fastening means (35) for fastening to said body (9).

4. A sensor assembly as claimed in Claim 3, characterized in that said integrated circuit (8) is fitted on to said spacer element (11); and said spacer element (11) comprises through openings (23) through which contact pins (30) of said integrated circuit (8) extend.

5. A sensor assembly as claimed in Claim 3 or 4, characterized in that said spacer element (11) integrally comprises a hollow terminal (24) housing the end portion of an electric cable (7) connected to said printed circuit (12).

6. A sensor assembly as claimed in one of Claims 3-5, characterized in that said spacer element (11) and said printed circuit (12) are each substantially in the form of an annular disk; and said printed circuit (12) comprises locating means (32); said reference members (20) cooperating with said locating means (32) to define a predetermined superimposed position of said printed circuit (12) on said spacer element (11).

7. A sensor assembly as claimed in Claim 6, characterized in that said reference members (20) comprise teeth extending integrally towards said printed circuit (12) from the inner edge (19) of said spacer element (11); and said locating means (32) comprise recesses on the inner edge (31) of said printed circuit (12).

8. A sensor assembly as claimed in Claim 6 or 7, characterized in that said spacer element (11) and said printed circuit (12) each present at least one seat (22) on a respective outer edge (21, 33); each said seat (22) providing for mechanically fastening said spacer element (11) and said printed circuit (12) to said body (9).

9. A sensor assembly as claimed in one of Claims 3-8, characterized in that said mechanical fastening means (35) comprise at least one tab cut from said flange (13) and bent towards said printed circuit (12).

10. A sensor assembly as claimed in one of Claims 3-9, characterized in that said flange (13) comprises slots (36) located at said contact pins (30) and at said end portion of said electric cable (7) connected to said printed circuit (12).

11. A sensor assembly as claimed in one of Claims 5-10, characterized in that said body (9) comprises a radial appendix (37) housing said hollow terminal (24); said radial appendix (37) being integral with said body (9).

## Patentansprüche

1. Verfahren zum Herstellen einer Sensoranordnung (3) für eine elektromagnetische Detektoreinrichtung (1) mit einem Körper (9) aus einem isolierenden Material, in den eine gedruckte Schaltung (12) und wenigstens eine integrierte Schaltung (8) eingebettet sind, wobei die integrierte Schaltung (8) Kontaktstifte (30) aufweist, die mit der gedruckten Schaltung (12) verbunden sind, gekennzeichnet durch die aufeinanderfolgenden Schritte:
- Anordnen eines ringförmigen Abstandselementes (11) zwischen der gedruckten Schaltung (12) und der integrierten Schaltung (8),
- Schweißen der Kontaktstifte (30) der integrierten Schaltung (8) an die gedruckte Schaltung,
- Anordnen eines Metallflansches (13) auf der gedruckten Schaltung, um eine Unterbaugruppe (10) zu bilden,
- Spritzgießen eines Kunststoffmaterials in die Unterbaugruppe, um den Körper (9) zu bilden.

2. Verfahren nach Anspruch 1, dadurch gekennzeichnet, daß vor dem Schritt der Anordnung eines Metallflansches ein elektrisches Kabel (7) an die gedruckte Schaltung (12) geschweißt wird.

3. Sensoranordnung (3) für eine elektromagnetische Detektoreinrichtung (1) mit einem Körper (9) aus einem starren Material, in den eine gedruckte Schaltung (12) und wenigstens eine integrierte Schaltung (8) eingebettet sind, dadurch gekennzeichnet, daß der Körper (9) durch Spritzgießen eines Kunststoffmaterials gebildet ist und die Anordnung weiterhin ein ringförmiges Abstandselement (11), das zwischen der gedruckten Schaltung (12) und der integrierten Schaltung (12) angeordnet ist und Bezugselemente (20) zur genauen Positionierung der integrierten Schaltung (8) aufweist, und einen Metallflansch (13) umfaßt, der außen an der gedruckten Schaltung (12) auf der Seite der gedruckten Schaltung angebracht ist, die dem Abstandselement (11) gegenüberliegt, welcher Flansch (13) mechanische Befestigungseinrichtungen (35) zur Befestigung am Körper (9) aufweist.

4. Sensoranordnung nach Anspruch 3, dadurch gekennzeichnet, daß die integrierte Schaltung (8) an dem Abstandselement (11) angebracht ist und das Abstandselement (11) durchgehende Öffnungen (23) umfaßt, durch die die Kontaktstifte (30) der integrierten Schaltung (8) verlaufen.

5. Sensoranordnung nach Anspruch 3 oder 4, dadurch gekennzeichnet, daß das Abstandselement (11) in einem Stück einen hohlen Anschluß (24) aufweist, der den Endabschnitt eines elektrischen Kabels (7) aufnimmt, das mit der gedruckten Schaltung (12) verbunden ist.

6. Sensoranordnung nach einem der Ansprüche 3 bis 5, dadurch gekennzeichnet, daß das Abstandselement (11) und die gedruckte Schaltung (12) jeweils im wesentlichen in Form einer Ringscheibe ausgebildet sind, und daß die gedruckte Schaltung (12) Lokalisierungseinrichtungen (32) umfaßt, wobei die Bezugselemente (20) mit den Lokalisierungseinrichtungen (32) zusammenarbeiten, um eine bestimmte übereinanderliegende Anordnung der gedruckten Schaltung (12) auf dem Abstandselement (11) festzulegen.

7. Sensoranordnung nach Anspruch 6, dadurch gekennzeichnet, daß die Bezugselemente (20) Zähne umfassen, die in einem Stück vom inneren Rand (19) des Abstandselementes (11) in Richtung auf die gedruckte Schaltung (12) verlaufen und daß die Lokalisierungseinrichtungen (32) Aussparungen am inneren Rand (31) der gedruckten Schaltung (12) umfassen.

8. Sensoranordnung nach Anspruch 6 oder 7, dadurch gekennzeichnet, daß das Abstandselement (11) und die gedruckte Schaltung (12) jeweils wenigstens einen Sitz (22) an einem jeweiligen äußeren Rand (21, 33) zeigen, wobei jeder Sitz (22) für die mechanische Befestigung des Abstandselementes (11) und der gedruckten Schaltung (12) am Körper (9) sorgt.

9. Sensoranordnung nach einem der Ansprüche 3 bis 8, dadurch gekennzeichnet, daß die mechanischen Befestigungseinrichtungen (35) wenigstens eine Zunge umfassen, die aus dem Flansch (13) geschnitten und in Richtung auf die gedruckte Schaltung (12) gebogen ist.

10. Sensoranordnung nach einem der Ansprüche 3 bis 9, dadurch gekennzeichnet, daß der Flansch (13) Schlitze (36) umfaßt, die an den Kontaktstiften (30) und an dem Endabschnitt des elektrischen Kabels (7) angeordnet sind, das mit der gedruckten Schaltung (12) verbunden ist.

11. Sensoranordnung nach einem der Ansprüche 5 bis 10, dadurch gekennzeichnet, daß der Körper (9) einen radialen Ansatz (37) umfaßt, der den hohlen Anschluß (24) aufnimmt, wobei der radiale Ansatz (37) in einem Stück mit dem Körper (9) ausgebildet ist.

## Revendications

1. Procédé de fabrication d'un ensemble de capteur (3) destiné à un dispositif de détection électromagnétique (1), comprenant un corps (9) de matériau isolant incorporant un circuit imprimé (12) et au moins un circuit intégré (8), dans lequel ledit circuit intégré (8) présente des broches de contact (30) reliées audit circuit imprimé (12), caractérisé par les étapes successives consistant à :
- placer un élément d'espacement annulaire (11) entre ledit circuit imprimé (12) et ledit circuit intégré (8),
- souder lesdites broches de contact (30) dudit circuit intégré (8) audit circuit imprimé (12),
- placer une bride métallique (13) sur ledit circuit imprimé afin de constituer un sous-ensemble (10),
- mouler par injection un matériau de matière plastique jusque dans ledit sous-ensemble afin de constituer ledit corps (9).

2. Procédé selon la revendication 1, caractérisé en ce qu'avant ladite étape consistant à placer une bride métallique, un câble électrique (7) est soudé audit circuit imprimé (12).

3. Ensemble de capteur (3) destiné à un dispositif de détection électromagnétique (1), comprenant un corps (9) fait d'un matériau rigide incorporant un circuit imprimé (12) et au moins un circuit intégré (8) caractérisé en ce que ledit corps (9) est fait d'un matériau de matière plastique moulé par injection et en ce que ledit ensemble comprend en outre un élément d'espacement annulaire (11) disposé entre ledit circuit imprimé (12) et ledit circuit intégré (8) et comportant des éléments de référence (20) destinés à positionner de façon précise ledit circuit intégré (8), et une bride métallique (13) fixée extérieurement audit circuit imprimé (12) du côté dudit circuit imprimé à l'opposé dudit élément d'espacement (11), ladite bride (13) comportant des moyens de fixation mécaniques (35) destinés à une fixation audit corps (9).

4. Ensemble de capteur selon la revendication 3, caractérisé en ce que ledit circuit intégré (8) est fixé sur ledit élément d'espacement (11), et ledit élément d'espacement (11) comprend des ouvertures traversantes (23) au travers desquelles des broches de contact (30) dudit circuit intégré (8) s'étendent.

5. Ensemble de capteur selon la revendication 3 ou 4, caractérisé en ce que ledit élément d'espacement (11) comprend de façon intégrée une tête de raccordement creuse (24) logeant la partie d'extrémité d'un câble électrique (7) relié audit circuit imprimé (12).

6. Ensemble de capteur selon l'une des revendications 3 à 5, caractérisé en ce que ledit élément d'espacement (11) et ledit circuit imprimé (12) se présentent chacun pratiquement sous la forme d'un disque annulaire, et ledit circuit imprimé (12) comprend des moyens de positionnement (32), lesdits éléments de référence (20) coopérant avec lesdits moyens de positionnement (32) afin de définir une position superposée prédéterminée dudit circuit imprimé (12) sur ledit élément d'espacement (11).

7. Ensemble de capteur selon la revendication 6, caractérisé en ce que lesdits éléments de référence (20) comprennent des dents s'étendant de façon intégrée en direction dudit circuit imprimé (12) à partir du bord interne (19) dudit élément d'espacement (11), et en ce que lesdits moyens de positionnement (32) comprennent des évidements sur le bord interne (31) dudit circuit imprimé (12).

8. Ensemble de capteur selon la revendication 6 ou 7, caractérisé en ce que ledit élément d'espacement (11) et ledit circuit imprimé (12) présentent chacun au moins un siège (22) sur un bord externe respectif (21, 33), chaque dit siège (22) permettant une fixation mécanique dudit élément d'espacement (11) et dudit circuit imprimé (12) audit corps (9).

9. Ensemble de capteur selon l'une des revendications 3 à 8, caractérisé en ce que ledit moyen de fixation mécanique (35) comprend au moins une patte découpée à partir de ladite bride (13) et repliée en direction dudit circuit imprimé (12).

10. Ensemble de capteur selon l'une des revendications 3 à 9, caractérisé en ce que ladite bride (13) comprend des fentes (36) disposées au niveau desdites broches de contact (30) et au niveau de ladite partie d'extrémité dudit câble électrique (7) relié audit circuit imprimé (12).

11. Ensemble de capteur selon l'une des revendications 5 à 10, caractérisé en ce que ledit corps (9) comprend un appendice radial (37) logeant ladite tête de raccordement creuse (24), ledit appendice radial (37) étant intégré audit corps (9).
